Europäisches Patentamt

European Patent Office

Office européen des brevets

(19)

(11) **EP 0 868 334 B1**

(12) **EUROPÄISCHE PATENTSCHRIFT**

(45) Veröffentlichungstag und Bekanntmachung des Hinweises auf die Patenterteilung:
**22.11.2000 Patentblatt 2000/47**

(21) Anmeldenummer: **96924771.7**

(22) Anmeldetag: **25.07.1996**

(51) Int Cl.$^7$: **B60T 8/40**, F04B 49/06

(86) Internationale Anmeldenummer:
**PCT/DE96/01373**

(87) Internationale Veröffentlichungsnummer:
**WO 97/23373 (03.07.1997 Gazette 1997/29)**

(54) **VERFAHREN UND VORRICHTUNG ZUR STEUERUNG EINER PUMPE EINES ELEKTROHYDRAULISCHEN BREMSSYSTEMS**

PROCESS AND DEVICE FOR CONTROLLING A PUMP IN AN ELECTRO-HYDRAULIC BRAKE SYSTEM

PROCEDE ET DISPOSITIF POUR COMMANDER LA POMPE D'UN SYSTEME DE FREINAGE ELECTROHYDRAULIQUE

(84) Benannte Vertragsstaaten:
**DE FR GB SE**

(30) Priorität: **22.12.1995 DE 19548248**

(43) Veröffentlichungstag der Anmeldung:
**07.10.1998 Patentblatt 1998/41**

(73) Patentinhaber: **ROBERT BOSCH GMBH**
**70442 Stuttgart (DE)**

(72) Erfinder:
• **SCHUNCK, Eberhardt**
**D-76829 Landau (DE)**
• **HACHTEL, Jürgen**
**D-74219 Möckmühl (DE)**

(56) Entgegenhaltungen:
WO-A-94/07717    WO-A-95/14595
DE-A- 3 241 039    DE-A- 4 020 449
DE-A- 4 333 568    DE-A- 4 343 386

**Beschreibung**

Stand der Technik

Die Erfindung betrifft ein Verfahren zur Steuerung einer Pumpe eines elektrohydraulischen Bremssystems und eine Vorrichtung zur Steuerung einer von einem Pumpenmotor angetriebenen Pumpe, wobei die Vorrichtung mit der Pumpe eines elektrohydraulischen Bremssystems in Verbindung steht.

Bei einem elektrohydraulischen Bremssystem wird die Bremsflüssigkeit aus einem Druckspeicher über Ventile in die einzelnen Radzylinder eingesteuert. Dieser Druckspeicher wird mit einer Pumpe geladen. Wird die Pumpe dauernd betrieben, so führt dies zu einer erheblichen Geräuschemission und einer Störung des Fahrkomforts. Desweiteren können in bestimmten Betriebszuständen Resonanzerscheinungen auftreten.

Aus der gattungsbildenden DE 32 41 039 A1 ist eine Bremskraftregelanlage mit einem Antiblockiersystem und einem Bremskraftverstärker bekannt. Die Schrift offenbart dabei ein Verfahren zur Steuerung einer Pumpe eines elektrohydraulischen Bremssystems, bei dem die Hydraulikflüssigkeit aus einem Druckspeicher über Ventilmittel in Radbremszylinder einsteuerbar ist, wobei die Hydraulikflüssigkeit mit der Pumpe in den Druckspeicher gefördert wird und wobei die Pumpe mit einem bedarfsgerecht vorgebbaren Pulspausenverhältnis angesteuert wird. Die Schrift offenbart weiterhin, daß ein Vorteil dieser Bremskraftregelanlage darin liegt, daß das Geräuschniveau beim Betrieb lediglich des Bremskraftverstärkers erheblich reduziert wird. Bei Wirksamwerden des Antiblockiersystems ist die Geräuschentwicklung jedoch unverändert.

Aufgabe der Erfindung

Der Erfindung liegt die Aufgabe zugrunde, ein Verfahren zur Steuerung einer Pumpe eines elektrohydraulischen Bremssystems und eine Vorrichtung zur Steuerung einer von einem Pumpenmotor angetriebenen Pumpe, wobei die Vorrichtung mit der Pumpe eines elektrohydraulischen Bremssystems in Verbindung steht, anzugeben, wodurch die Geräuschbelastung im Betrieb des elektrohydraulischen Bremssystems noch weiter verringert ist. Diese Aufgabe wird durch die in den unabhängigen Ansprüchen gekennzeichneten Merkmale gelöst.

Vorteile der Erfindung

Mit der erfindungsgemäßen Vorgehensweise wird eine geringe Geräuschemission der Pumpe bzw. des Bremssystems ermöglicht. Dadurch ist die Verwendung von weniger aufwendigen und kostengünstigeren Pumpen, beispielsweise einer Kolbenpumpe möglich. Desweiteren werden Bordnetzstromschwankungen und damit elektromagnetische Störungen verringert.

Ein weiterer Vorteil ergibt sich dadurch, daß Resonanzanregungen vermieden werden können.

Vorteilhafte und zweckmäßige Ausgestaltungen und Weiterbildungen der Erfindung sind in den Unteransprüchen gekennzeichnet.

Zeichnungen

Die Erfindung wird nachstehend anhand der in den Zeichnungen dargestellten Ausführungsformen erläutert. In Figur 1 ist als Blockdiagramm das erfindungsgemäße elektrohydraulische Bremssystem dargestellt. Figur 2 zeigt eine erste Ausführungsform der erfindungsgemäßen Steuerung der Pumpe des elektrohydraulischen Bremssytems. Figur 3 zeigt die Ansteuersignale zur Beaufschlagung der Endstufe des Pumpenmotors und Figur 4 zeigt eine weitere Ausgestaltung der erfindungsgemäßen Steuerung.

Beschreibung der Ausführungsbeispiele

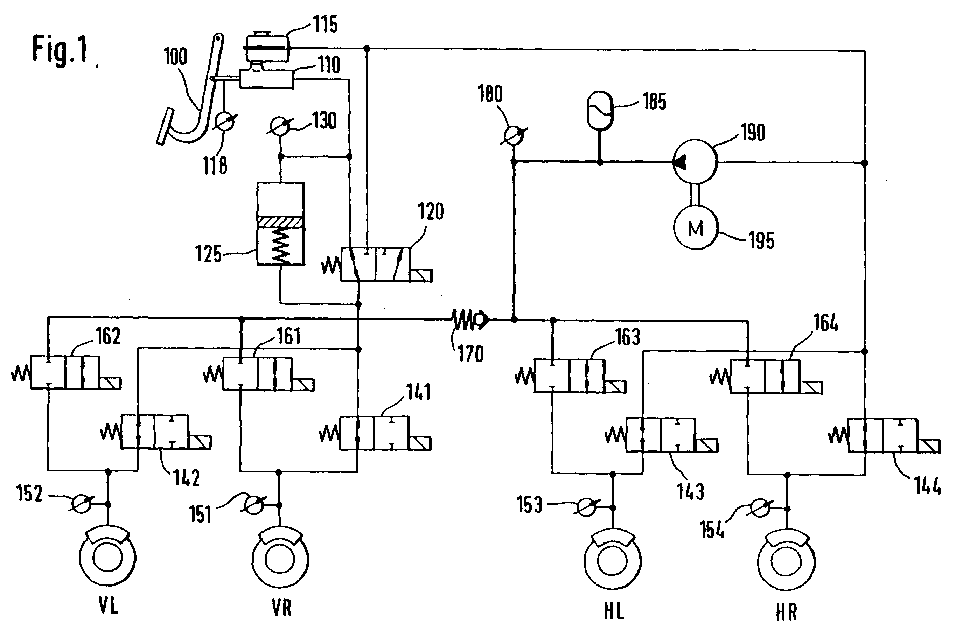

In Figur 1 sind die wesentlichsten Elemente des elektrohydraulischen Bremssytems dargestellt. Ein Bremspedal ist mit 100 bezeichnet. Über das Bremspedal kann Druck in einem Hauptbremszylinder 110 aufgebaut werden. Mittels eines Pedalwegsensors 118 kann die Bewegung des Bremspedals erfaßt werden. Der Hauptbremszylinder steht mit einem Vorratsbehälter 115 in Kontakt. Der Hauptbremszylinder 110 steht in Verbindung mit einem Sicherheitsventil 120, das sich in seinem nicht bestromten Zustand in der dargestellten Stellung befindet. Parallel zu dem Sicherheitsventil ist ein Pedalwegsimulator 125 geschaltet.

In der Verbindungsleitung zwischen dem Hauptbremszylinder 110 und dem Sicherheitsventil 120 bzw. dem Pedalwegsimulator 125 ist ein Drucksensor 130 angeordnet, der ein Signal bereitstellt, das den Druck PHZ im Hauptbremszylinder anzeigt.

Im nicht bestromten Zustand gibt das Sicherheitsventil 120 die Verbindung zwischen dem Hauptbremszylinder und Auslaßventilen 141 und 142 frei. Die Auslaßventile sind ebenfalls in ihrem nicht bestromten Zustand in Durchlaßstellung geschaltet und geben die Verbindung zu Radbremszylindern frei.

Das Auslaßventil 141 ist dem Radbremszylinder VR des rechten Vorderrads und das Auslaßventil 142 dem Radbremszylinder VL des linken Vorderrads zugeordnet. Der Druck in den Radbremszylindern kann durch Sensoren 151 und 152 erfaßt werden.

Die Radbremszylinder stehen Desweiteren über Einlaßventile 161 und 162 und ein Rückschlagventil 170 mit einem Druckspeicher 185 in Kontakt. Der Druck in dem Druckspeicher 185 kann mittels eines Drucksensors 180 erfaßt werden. Das Einlaßventil 161 ist dem rechten Vorderrad und das Einlaßventil 162 dem linken Vorderrad zugeordnet.

Desweiteren steht der Druckspeicher 185 über die Einlaßventile 163 und 164 mit dem Radbremszylinder HL des linken Hinterrad bzw. mit dem Radbremszylinder HR des rechten Hinterrad in Kontakt. Die Radbremszylinder des linken Hinterrades bzw. das rechten Hinterrades stehen wiederum über Auslaßventile 143 bzw. Auslaßventile 144 mit dem Vorratsbehälter 115 in Kontakt.

Die Auslaßventile 141 und 142 können über das Sicherheitsventil 120 ebenfalls mit dem Vorratsbehälter 115 in Kontakt gebracht werden.

Eine Pumpe 190, die von einem Pumpenmotor 195 angetrieben wird, fördert die Hydraulikflüssigkeit von dem Vorratsbehälter 115 in den Druckspeicher 185.

Diese Einrichtung arbeitet nun wie folgt. Beim ordnungsgemäßen Betrieb wird das Sicherheitsventil 120 bestromt. Das Sicherheitsventil 120 gibt die Verbindung zwischen dem Vorratsbehälter 115 und den Auslaßventilen frei und unterbricht die Verbindung zwischen dem Hauptbremszylinder 110 und den Auslaßventilen. Betätigt der Fahrer das Bremspedal 100, so ermittelt der Sensor 118 ein Signal, das den Pedalweg des Bremspedals 100 entspricht und/oder der Sensor 130 liefert ein Drucksignal bezüglich des Druckes im Hauptbremszylinder.

Ausgehend von wenigstens einem dieser Signale, die dem Fahrerwunsch entsprechen und evtl. weiterer Betriebskenngrößen bestimmt eine nicht dargestellte Steuereinheit Ansteuersignale zur Beaufschlagung der Einlaßventile 161, 162, 163 und 164 sowie der Auslaßventile 141, 142, 143 und 144.

Durch Bestromen des Pumpenmotors 195 wird die Pumpe 190 angetrieben und fördert Hydraulikflüssigkeit vom Vorratsbehälter 115 in den Druckspeicher 185. Dies hat zur Folge, daß der Druck im Druckspeicher 185, der vom Drucksensor 180 gemessen wird, ansteigt. Durch Öffnen der Einlaßventile 161 bis 164 und Schließen der Auslaßventile 141 bis 144, wird der Druck in den Radbremszylindern abhängig vom Fahrerwunsch erhöht. Durch Öffnen der Auslaßventile und Schließen der Einlaßventile kann der Druck in den Radbremszylindern entsprechend der Pedalbetätigung abgebaut werden.

Besonders vorteilhaft ist es, wenn der Druck in den Radbremszylindern mit den Drucksensoren 151 bis 154 gemessen wird. In diesem Fall ist eine Druckregelung und/oder eine Fehlerüberwachung möglich.

Der Pedalwegsimulator 125 bewirkt, daß der Fahrer am Bremspedal eine entsprechende Kraft spürt, die bei entsprechender Betätigung des Bremspedals bei einem herkömmlichen Bremssystem auftreten würde.

Bei Ausfall der Einrichtung wird das Sicherheitsventil 120 stromlos und gibt die Verbindung zwischen dem Hauptbremszylinder 110 und den Radbremszylindern der Vorderräder VL und VR frei. Damit hat der Fahrer über das Bremspedal Durchgriff auf die Radbremszylinder der Vorderräder.

Die Pumpe 190 muß ausreichend Hydraulikflüssigkeit in den Druckspeicher 185 fördern, damit ein ausreichender Bremsdruck zur Verfügung steht. Erfindungsgemäß wird der Pumpenmotor 195, mit dem die Pumpe betrieben wird, leistungsgeregelt angesteuert. Um sicherzustellen, daß der Speicher durch mehrmaliges Betätigen der Bremse nicht entleert wird, stellt man diese Leistungsregelung in Abhängigkeit vom Volumenverbrauch der Bremsung ein.

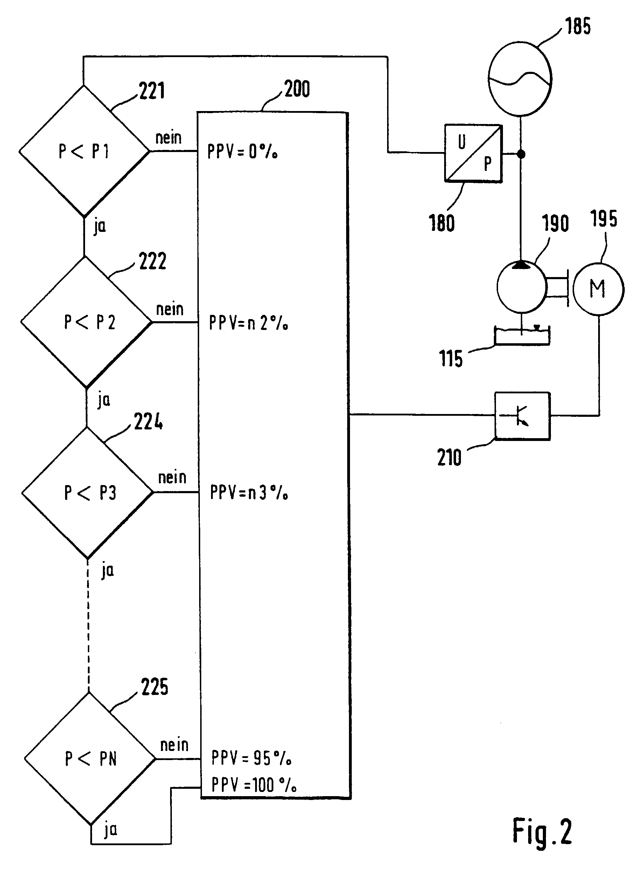

Eine mögliche Art der Ansteuerung ist in Figur 2 dargestellt. Elemente, die bereits in Figur 1 beschrieben sind, sind mit entsprechenden Bezugszeichen bezeichnet. Der Pumpenmotor 195 wird über eine Endstufe 210 mit Spannung beaufschlagt. Die Endstufe 210 wird hierzu von einer Steuereinheit 200 mit einem Signal mit einem vorgebbaren Pulspausenverhältnis PPV beaufschlagt. Die Steuereinheit 200 wählt das Pulspausenverhältnis abhängig vom Druck P, der vom Sensor 180 erfaßt wird, aus.

Erkennt eine erste Abfrage 221, daß der Druck P kleiner ist als ein erster Schwellwert P1, so folgt eine weitere Abfrage 222. Ist dies nicht der Fall, so wird ein erstes Pulspausenverhältnis von 0 % gewählt. Dies bedeutet, der Pumpenmotor wird nicht bestromt. Die Abfrage 222 überprüft, ob der Druck P kleiner als ein zweiter Schwellwert P2 ist. Ist dies nicht der Fall, so wird ein Pulspausenverhältnis von N2 % gewählt. Ist der Druck kleiner als P2, so überprüft eine weitere Abfrage 223, ob der Druck P kleiner als ein Schwellwert P3 ist. Ist dies nicht der Fall, so wird das Pulspausenverhältnis PPV von N3 % gewählt. Ist dies der Fall, so folgen weitere Abfragen. Eine letzte Abfrage 225 überprüft, ob der Druck P kleiner ist als ein weiterer Schwellwert PN. Ist dies nicht der Fall, so wird das Pulspausenverhältnis von beispielsweise 95 % gewählt. Ist dies der Fall, wird ein Pulspausenverhältnis von 100 % gewählt. Dies bedeutet der Pumpenmotor wird voll bestromt. Für die Druckwerte P1, P2 bis PN gilt, daß P1 der größte Druckwert und PN der kleinste Druckwert ist.

Bei dieser Ausgestaltung wird die Leistungssteuerung des Pumpenmotors über das Pulspausenverhältnis des Ansteuerstroms realisiert. Dabei wird das Pulspausenverhältnis in Abhängigkeit der Abweichung des Speicherdrucks von einem Sollwert P1 eingestellt. Je größer die Abweichung des Solldrucks vom tatsächlichen Druck ist, bzw. je kleiner der Druckwert ist, desto größer ist das Pulspausenverhältnis der Pumpenansteuerung.

Es kann auch vorgesehen sein, daß das Pulspausenverhältnis proportional zur Abweichung des Druckes P vom Sollwert P1 vorgebbar ist.

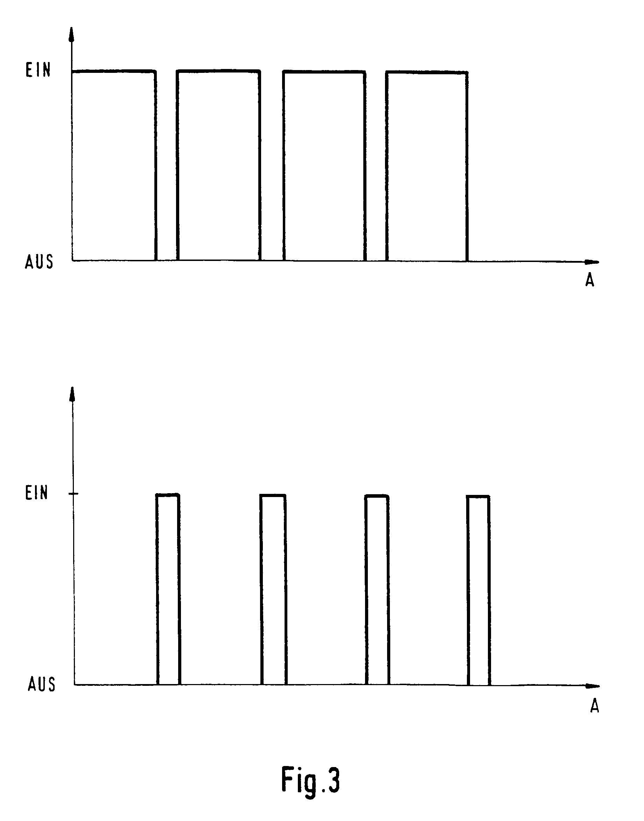

In Figur 3 sind verschiedene Ansteuersignale für verschiedene Pulspausenverhältnisse PPV aufgetragen. In Figur 3a ist ein Signal mit einem großen Pulspausenverhältnis dargestellt, das verwendet wird, wenn der Druck weit abgefallen ist. In Figur 3b ist ein Signal mit einem kleinen Pulspausenverhältnis aufgetragen, das gewählt wird, wenn nur ein geringer Bedarf an Hydraulikflüssigkeit besteht.

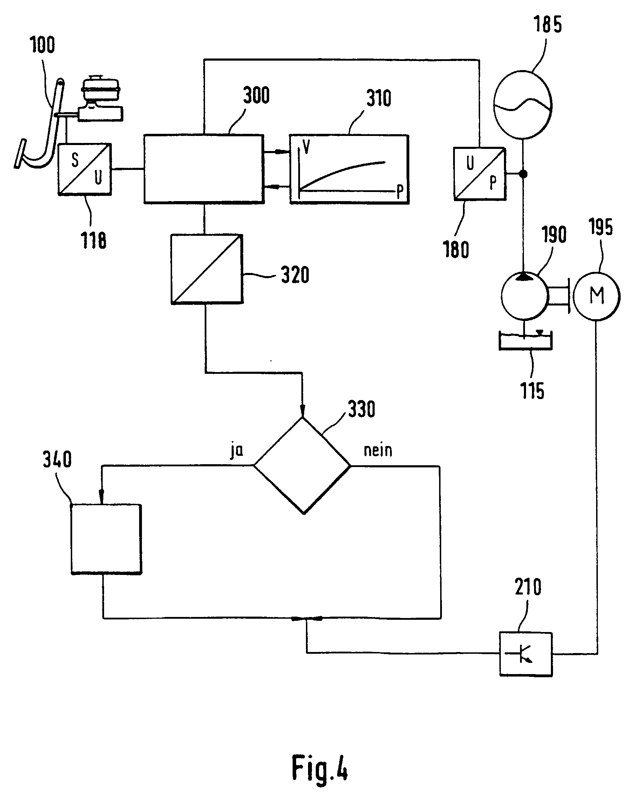

In Figur 4 ist eine weitere Ausführungsform der Vorgehensweise dargestellt. Bereits beschriebene Elemente sind mit entsprechenden Bezugzeichen bezeichnet. Eine Verbrauchsermittlung 300 empfängt die Signale des Sensors 118, des Sensors 180 und eines Bremsenmodells 310. Die Verbrauchsermittlung 300 beaufschlagt zum einen das Bremsenmodell 310 und zum anderen die Leistungsvorgabe 320 mit Signalen.

Erfindungsgemäß ist eine Abfrage 330 vorgesehen, die überprüft, ob ein Resonanzfall eintreten kann. Ist dies der Fall, so wird in Schritt 340 die Frequenz des Ansteuersignals geändert. Ist dies nicht der Fall, so wird unmittelbar die Endstufe 210 angesteuert.

Diese Einrichtung arbeitet nun wie folgt. Ausgehend von dem Druck im Druckspeicher und der Betätigung des Bremspedals, die mittels des Sensors 118 erkannt wird, ermittelt die Verbrauchsermittlung 300 die Volumenleistung PV, die die Pumpe 190 bereitstellen muß. Die Volumenleistung PV entspricht dem von der Pumpe innerhalb eines bestimmten Zeitraums bereitszustellenden Volumen V an Bremsflüssigkeit.

Dies geschieht unter Verwendung eines Bremsmodells 310. Das Bremsmodell ist beispielsweise als Kennfeld ausgestaltet, in dem abhängig vom Druck P das Volumen V an zu fördernder Hydraulikflüssigkeit abgelegt ist. Für den Zusammenhang zwischen dem Volumen V und dem Druck P besteht nahezu ein lineare Beziehung. Diese kann näherungsweise mit der folgenden Formel beschrieben werden:

$$V = A + B * P$$

Dabei handelt es sich bei A und B um Konstanten, die bekannt sind, oder gemessen werden können.

Der Volumenbedarf V ist bei jeder Bremsung nahezu gleich. Die Volumenleistung PV ergibt sich aus der Anzahl der Bremsungen innerhalb des bestimmten Zeitraums. Die Anzahl der Bremsungen wird anhand der Betätigung des Bremssignals ermittelt.

Ausgehend von der bestimmten Volumenleistung ermittelt die Leistungsvorgabe 320 die erforderliche Leistung bzw. das Pulspausenverhältnis PPV, mit der der Pumpenmotor 195 beaufschlagt werden muß. Zwischen dem Pulspausenverhältnis PPV und der Volumenleistung PV gilt die Beziehung:

$$PVmax * PPV = PV$$

Dabei ist PVmax die maximal mögliche Volumenleistung der Pumpe bei voller Bestromung das heißt bei einem PPV von 100%.

Die Abfrage 330 überprüft, ob Resonanzeffekte auftreten können. Die Betriebszustände, bei denen Resonanzeffekte auftreten können werden empirisch ermittelt. Das Vorliegen dieser Betriebszustände wird in der Abfrage 330 überprüft. Ferner werden Resonanzfrequenzen errechnet. Insbesondere bei einem linearen Zusammenhang zwischen der Drehzahl der Pumpe und dem Pulspauseverhältnis PPV treten Resonanzen auf. Erkennt die Abfrage 330 eine solche Frequenz des Ansteuersignals, bei welcher Resonanzeffekte auftreten können wird auf Resonanz erkannt. Ist dies der Fall, so wird in Schritt 340 die Frequenz des Ansteuersignals verändert. Mit dem so gewonnenen Ansteuersignal wird dann die Endstufe 210 beaufschlagt.

Die Leistungssteuerung wird bei dieser Ausführungsform über ein Pulspausenverhältnis des Ansteuerstroms realisiert. Dabei wird das Pulspausenverhältnis in Abhängigkeit eines Modells zur Ermittlung des Volumenverbrauchswerts der Bremsung unter Verwendung eines Bremsenmodells eingestellt. Das Bremsenmodell berücksichtigt, daß durch mehrmaliges Bremsen mit höherem Druck innerhalb kurzer Zeit ein erhöhter Volumenverbrauch einstellt. Um diesen zu kompensieren, ist eine höhere Pumpenleistung, das heißt ein größeres Pulspausenverhältnis erforderlich. Der Volumenverbrauch beim stationären Bremsen mit niedererem Druck ist geringer. Hier kann das Nachladen des Speichers mit geringerer Leistung, das heißt mit kleinerem Pulspausenverhältnis erfolgen.

Sowohl bei der Variante gemäß Figur 2 als auch bei der gemäß Figur 4 werden erfindungsgemäß Resonanzanregungen vermieden. Hierzu werden die Anregungsfrequenzen, die zu einer erhöhten Geräuschemission führen, ermittelt und die Frequenz bzw. das Pulspausenverhältnis wird so eingestellt, daß diese Resonanzen nicht auftreten. Zur Information über die Pumpenanregungsfrequenz kann ein hochfrequenter Anteil des Speicherdrucksignales ausgewertet werden.

Das Pulspausenverhältnis wird so gewählt, daß das Geräusch minimal ist und gleichzeitig der Speicher relativ schnell nachgeladen wird. Die Periodendauer der Taktung wird hierbei kleiner sein als die Nachlaufzeitkonstante des Motor-Pumpensystems.

**Patentansprüche**

1. Verfahren zur Steuerung einer Pumpe eines elektrohydraulischen Bremssystems,

   - bei dem Hydraulikflüssigkeit aus einem Druckspeicher (185) über Ventilmittel (141-144, 161-164) in Radbremszylinder (VL, VR, HL, HR) einsteuerbar ist,
   - wobei mit der Pumpe (190) die Hydraulikflüssigkeit in den Druckspeicher (185) gefördert wird und
   - wobei die Pumpe (190) mit einem bedarfsgerecht vorgebbaren Pulspausenverhältnis angesteuert wird,

   dadurch gekennzeichnet,
   daß die Frequenz bzw. das Pulspausenverhältnis des Steuersignals der Pumpe abhängig von Resonanzeffekten (330) vorgegeben wird (340).

**2.** Verfahren nach Anspruch 1, dadurch gekennzeichnet, daß überprüft wird (330), ob Betriebszustände vorliegen, bei denen Resonanzeffekte auftreten können und daß bei Vorliegen eines solchen Betriebszustandes die Frequenz des Steuersignals verändert wird (340).

**3.** Verfahren nach Anspruch 1, dadurch gekennzeichnet, daß zur Überprüfung empirisch ermittelte Betriebszustände, bei denen Resonanzeffekte auftreten, verwendet werden.

**4.** Verfahren nach Anspruch 2 oder 3, dadurch gekennzeichnet, daß die Betriebszustände anhand von Anregungsfrequenzen, die zu einer erhöhten Geräuschemission führen, ermittelt werden und daß die Frequenz des Steuersignals so eingestellt wird (340), daß diese Resonanzen nicht auftreten.

**5.** Verfahren nach einem der vorhergehenden Ansprüche, dadurch gekennzeichnet, daß zur Information über die Pumpenanregungsfrequenz ein hochfrequenter Anteil aus einem Speicherdrucksignal (180) ausgewertet wird.

**6.** Verfahren nach einem der vorhergehenden Ansprüche, dadurch gekennzeichnet, daß die Periodendauer des Steuersignals kleiner ist als eine Nachlaufzeitkonstante des Motor-Pumpensystems (190, 195).

**7.** Verfahren nach einem der vorhergehenden Ansprüche, dadurch gekennzeichnet, daß das Pulspausenverhältnis außerdem abhängig vom Volumenbedarf (300) an Hydraulikflüssigkeit vorgegeben wird.

**8.** Verfahren nach einem der vorhergehenden Ansprüche, dadurch gekennzeichnet, daß das Pulspausenverhältnis außerdem abhängig von einem Druck (180) im Druckspeicher vorgegeben wird.

**9.** Vorrichtung zur Steuerung einer von einem Pumpenmotor (195) angetriebenen Pumpe (190), wobei die Vorrichtung mit der Pumpe (190) eines elektrohydraulischen Bremssystems in Verbindung steht, welches wenigstens die motorgetriebene Pumpe (190), einen Druckspeicher (185), Ventilmittel (141-144, 161, 164) und Radbremszylinder (VL, VR, HL, HR) enthält,

- bei dem mit der Pumpe (190) Hydraulikflüssigkeit in den Druckspeicher (185) gefördert wird und
- bei dem Hydraulikflüssigkeit aus dem Druckspeicher (185) über die Ventilmittel (141-144, 161-164) in die Radbremszylinder (VL, VR, HL, HR) einsteuerbar ist
- wobei die Vorrichtung den Pumpenmotor (195) mit einem bedarfsgerecht vorgebbaren Pulspausenverhältnis ansteuert, dadurch gekennzeichnet,

daß die Vorrichtung die Frequenz bzw. das Pulspausenverhältnis des Steuersignals für den Pumpenmotor (195) abhängig von Resonanzeffekten vorgibt.

## Claims

**1.** Method for controlling a pump of an electrohydraulic brake system,

- in which hydraulic fluid is capable of being fed from a pressure accumulator (185) via valve means (141-144, 161-164) into wheel-brake cylinders (VL, VR, HL, HR),
- the hydraulic fluid being conveyed into the pressure accumulator (185) by means of the pump (190), and
- the pump (190) being activated with a mark-to-space ratio predeterminable according to requirements,

characterized
in that the frequency or the mark-to-space ratio of the control signal of the pump is predetermined (340) as a function of resonant effects (330).

**2.** Method according to Claim 1, characterized in that a check is made (330) as to whether operating states are present in which resonant effects may occur, and in that, when such an operating state is present, the frequency of the control signal is changed (340).

**3.** Method according to Claim 1, characterized in that empirically determined operating states in which resonant effects occur are used for checking.

**4.** Method according to Claim 2 or 3, characterized in that the operating states are determined by means of exciting frequencies which lead to increased noise emission, and in that the frequency of the control signal is set (340) in such a way that these resonances do not occur.

**5.** Method according to one of the preceding claims, characterized in that a high-frequency component from an accumulator pressure signal (180) is evaluated for information on the pump exciting frequency.

**6.** Method according to one of the preceding claims, characterized in that the period of the control signal is smaller than an overshoot time constant of the motor/pump system (190, 195).

**7.** Method according to one of the preceding claims, characterized in that the mark-to-space ratio is also predetermined as a function of the volume requirement (300) of hydraulic fluid.

**8.** Method according to one of the preceding claims, characterized in that the mark-to-space ratio is also predetermined as a function of a pressure (180) in the pressure accumulator.

**9.** Device for controlling a pump (190) driven by a pump motor (195), the device being connected to the pump (190) of an electrohydraulic brake system which contains at least the motor-driven pump (190), a pressure accumulator (185), valve means (141-144, 161, 164) and wheel-brake cylinders (VL, VR, HL, HR),

- in which hydraulic fluid is conveyed into the pressure accumulator (185) by means of the pump (190), and
- in which hydraulic fluid is capable of being fed from the pressure accumulator (185) via the valve means (141-144, 161, 164) into the wheel-brake cylinders (VL, VR, HL, HR),
- the device activating the pump motor (195) with a mark-to-space ratio predeterminable according to requirements,

characterized
in that the device predetermines the frequency or the mark-to-space ratio of the control signal for the pump motor (195) as a function of resonant effects.

**Revendications**

**1.** Procédé de commande d'une pompe d'un système de freinage électrohydraulique dans lequel

- le liquide hydraulique est fourni à partir d'un réservoir de pression (185) par des distributeurs (141-144, 161-164) de manière commandée à des cylindres de freins de roues (VL, VR, HL, HR),
- la pompe (190) alimente le réservoir de pression (185) en liquide hydraulique et
- la pompe (190) est commandée selon un rapport de travail prédéterminé en fonction de la demande,

caractérisé en ce que
la fréquence ou le rapport de travail impulsion-pause du signal de commande de la pompe est prédéterminé en fonction des effets de résonance (330, 340).

**2.** Procédé selon la revendication 1,
caractérisé en ce qu'
on vérifie (330) l'existence d'état de fonctionnement avec d'éventuels effets de résonance et si de tels états de fonctionnement existent, on modifie la fréquence du signal de commande (340).

**3.** Procédé selon la revendication 1,
caractérisé en ce que
pour le contrôle on utilise des états de fonctionnement déterminés de manière empirique pour lesquels on risque des effets de résonance.

**4.** Procédé selon les revendications 2 ou 3,
caractérisé en ce qu'
on détermine les états de fonctionnement à l'aide de fréquences d'excitation conduisant à une plus forte émission de bruit et on règle la fréquence du signal de commande (340) pour que de telles résonances ne se produisent pas.

**5.** Procédé selon l'une des revendications précédentes,
caractérisé en ce que
pour l'information concernant la fréquence d'excitation de la pompe on exploite une composante de haute fréquence du signal de la pression de réservoir (180).

**6.** Procédé selon l'une des revendications précédentes,
caractérisé en ce que
la durée de la période du signal de commande est inférieure à une constante de temps d'asservissement du système moteur-pompe (190, 195).

**7.** Procédé selon l'une des revendications précédentes,
caractérisé en ce que
le rapport de travail impulsion-pause est en outre prédéterminé en fonction de la demande volumique (300) en liquide hydraulique.

**8.** Procédé selon l'une des revendications précédentes,
caractérisé en ce que
le rapport de travail impulsion-pause est prédéterminé en outre en fonction de la pression (180) régnant dans le réservoir de pression.

**9.** Dispositif de commande d'une pompe (190) entraînée par un moteur (195), le dispositif coopérant avec la pompe (190) d'un système de freinage électrohydraulique, qui comprend au moins la pompe (190) entraînée par un moteur, un réservoir de pression (185), des distributeurs (141-144, 161, 164) et des cylindres de freins de roues (VL, VR, HL, HR),

- le liquide hydraulique étant fourni par une pompe (190) au réservoir de pression (185),
- le dispositif commandant le moteur (195) de la pompe avec un rapport de travail impulsion-pause prédéterminé en fonction de la demande,

caractérisé en ce que
le dispositif prédétermine la fréquence ou le rapport de travail impulsion-pause du signal de commande du moteur (195) de la pompe selon les effets de résonance.

Fig.1.

Fig.2

Fig.3

Fig.4